# EUROPEAN PATENT APPLICATION

(11) **EP 0 965 934 A2**
(43) Date of publication of application: **22.12.1999**
(21) Application number: 99304596.2
(22) Date of filing: 14.06.1999
(51) Int. Cl.: G06F 17/60

(54) **Data management and communication system for a domestic environment**

(30) Priority: 18.06.1998 GB 9813191; 04.09.1998 GB 9819316
(71) Applicant: NCR INTERNATIONAL INC., Dayton, Ohio 45479 (US)
(72) Inventor: Emmott, Stephen J., London SE1 9JL (GB); Woods, Sarah, London SW1W 8QR (GB)
(74) Representative: Cleary, Fidelma

(57) **Abstract**

A data management and communication system includes a kitchen appliance, such as a microwave oven (10), arranged to effect a predetermined domestic function independent of the data management and communication system. The kitchen appliance (10) includes input means (32) for the input of data, and communication means (28) arranged for connection to a communications network, such as the Internet, so as to allow for communication between the kitchen appliance (10) and a remote facility. The system provides electronic banking, electronic shopping and electronic mail facilities within a domestic environment.

## Description

The present invention relates to a data management and communication system for use in a domestic environment, the system being arranged to manage data and tQ communicate data between the household environment and selected remote facilities.

It is currently envisaged that in the future many everyday activities such as particular types of personal finance transactions and household shopping will increasingly involve electronic data transfer between consumers at home and the related service provider. Telephone banking is already very popular and many banks now offer customers the option of on-line home banking over the Internet. Large supermarkets and department stores offer home delivery services, where a customer places an order for specific goods such as groceries by telephone or over the Internet and the ordered goods are subsequently delivered to the customer's home. Payment is generally effected by providing credit/debit or store card details when placing the order.

At present, the provision of on-line services over the Internet is generally available only to consumers having access to a personal computer linked to the Internet. However, many consumers do not have access to a personal computer within their domestic environment or are reluctant to use such services because of lack of familiarity with the use computers. Even in households where consumers have access to a personal computer, the computer is rarely located in the most convenient domestic environment for use in performing routine domestic activities such as on-line shopping etc.

It is an object of the present invention to provide a data management and communication system which is conveniently incorporated into a domestic environment, is relatively inexpensive and is easy to operate.

According to one aspect of the present invention there is provided a data management and communication system, characterized by a kitchen appliance arranged to effect a predetermined domestic function independent of the data management and communication system, the kitchen appliance including input means for the input of data, and communication means arranged for connection to a communications network so as to allow for communication between the appliance and a remote facility.

The invention is advantageous in that it provides consumers with easy access to a communications network within their everyday domestic environment, without requiring a personal computer linked to the Internet. Since the system is provided in association with a kitchen appliance, it is particularly cost-effective and is convenient for use.

In a preferred embodiment, the input means comprises means for entering data relating to selected household commodities and the communication means comprises transfer means for transferring the input data to a remote management unit which is arranged to manage the procurement of the selected household commodities. The remote management unit preferably serves to manage the ordering and collection of the selected household commodities from a selected retailer and the delivery of the household commodities to a designated location. Hence, easy access to on-line shopping facilities is provided and since the system is conveniently located within the domestic environment, interactive management of on-line shopping for household commodities can readily and conveniently controlled.

The remote management unit may be arranged to communicate data relating to the costs and/or the availability of the selected household commodities from one or more designated retailers to the appliance, prior to ordering of the selected household commodities from the selected retailer. In this way, the user can check that the commodities required are available from a particular retailer and can compare the costs of the required commodities from various retailers before the order is placed.

Advantageously, the transfer means is arranged to transfer payment instructions in respect of procurement of the household commodities.

The transfer means may be arranged to record the data relating to the household commodities over a period of time, prior to transfer to the remote management unit. This allows a user to compile a "shopping list" over a period of time, by entering data relating to household commodities as and when products are consumed or when it comes to the user's attention that a particular commodity is required. The user can then transfer the input data to the remote management unit, as required.

The data input means may include a bar code reader for reading bar codes associated with household commodities, such as the bar codes frequently found on the packaging of household products. This facilitates the input of data relating to products bearing such a bar code. Alternatively or in addition, the input means may include a speech input system, so that data can be input verbally by a user to the system. This is particularly useful when no bar code is available and also facilitates the input of general data to the system.

The system is preferably housed within the domestic appliance. This novel integration of multiple technologies creates an entirely new domestic appliance that features additional functionality of mass consumer appeal which are not found in existing domestic appliances.

The communication means may be arranged to provide for the transfer of data from a remote information site to the system. In this way, appropriate information such as for example, cookery recipes involving one or more ingredients can be readily down-loaded over the Internet to the appliance.

Preferably the communications means includes an electronic mail facility, so that the appliance can be arranged to transmit and receive e-mail messages. The communications means may also include a home banking facility so that a user may carry out personal finance transactions from his domestic environment.

Advantageously, the appliance comprises a cooking appliance, such as, for example, a microwave oven. A microwave oven is particularly advantageous in that its construction, its function within the domestic environment and its dimensions render it suitable for use in accordance with the present invention

There is no known system that has the physical hardware capability of providing for example, integrated multi-functionality of Internet access, household commodity identification capability, speech recognition as a data and command input method, as well as performing its primary function as a common domestic appliance, such as cooking. The invention also provides a user with access on-line shopping and home banking facilities, in addition to other Web-based information within the domestic environment without requiring access to personal computer linked to the Internet.

The invention is described further hereinafter, by way of example only, with reference to the accompanying drawings in which:
Fig. 1a is a schematic plan view of a microwave oven embodying the present invention;
Fig. 1b is a schematic plan view of the door of the microwave of Fig. 1a; and
Fig. 2 is a block diagram of a complete management system employing apparatus embodying the present invention.

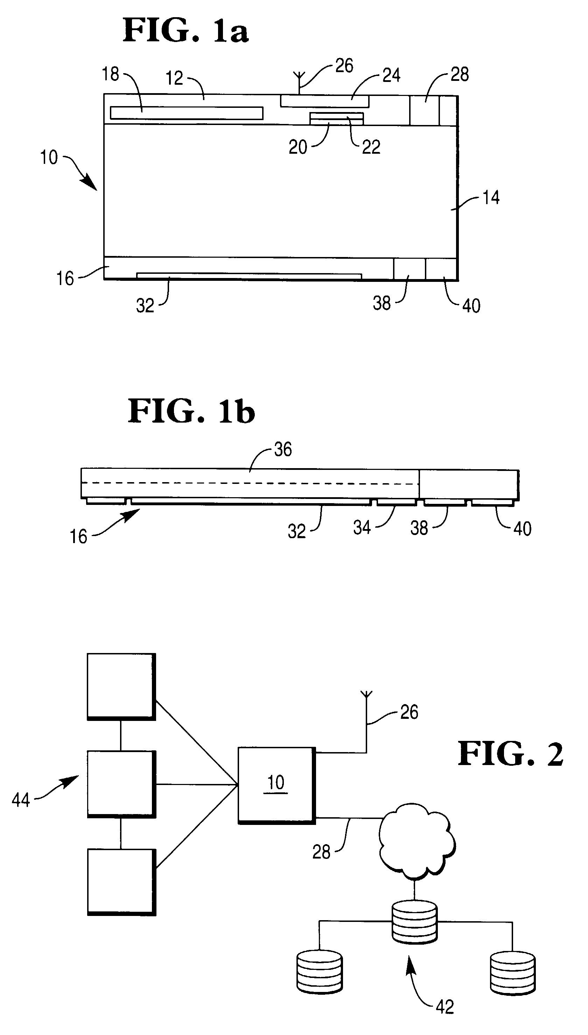

Turning now to Fig. 1a there is shown a schematic plan view of a microwave oven adapted so as to provide for the advantages of the present invention. Nowadays, a microwave oven is a common domestic appliance in many households and has particularly advantageous construction and dimensions for use in accordance with the present invention.

The microwave oven 10 illustrated, comprises a data processing region 12 located at the rear of the oven, a common central oven region 14 for receiving consumable food products to be cooked and a user interface region 16 at the front of the oven.

The data processing unit 12 comprises a central processing unit 18 connected to a video board 20 and a sound board 22 and also connected to a SCSI interface 24 and, if required, an aerial 26, or other appropriate signal input, for receiving a television broadcast signal. The aforementioned elements of the data processing unit 12 are advantageously arranged not only to provide the required control and operation of standard microwave functions but also the control and processing of data arising in relation to a variety of domestic and personal activities as will be described later.

The oven 10 is arranged to receive operating power by means of a mains supply unit 28 which, in accordance with a particularly advantageous aspect of the present invention, also provides for a communication channel for access to the Internet, so as to provide for communication of data to and from the domestic environment. It will of course be appreciated that the Internet access for the data processing portion 12 of the microwave oven 10 can alternatively be achieved by means of a dedicated modem and telephone line. However, since the domestic appliances commonly to be used in association with the present invention will in any case be connected to a mains supply, it is considered that by far the most advantageous means of achieving connection to the Internet is therefore via the mains supply of the appliance such as the oven 10.

The Internet connection in combination with appropriate software downloaded in the central processing unit 18 additionally provides the system with electronic mail, electronic banking and electronic shopping facilities as will be described in more detail later.

The data processing unit 12 is also downloaded with appropriate software, so that the system is provided with an electronic personal organizer facility comprising a diary, a calendar, a clock and various spread sheets.

Fig. 1b shows in greater detail the general construction of the user interface 16 of the oven 10 which, as is common for such domestic appliances, includes the door ofthe oven. The door provides for sealable access to the interior of the oven 14 and also functions as the part of the user interface 16 as will be described later.

The door includes a liquid crystal display touch screen 32 which is mounted within a plastic mount 34 and which is protected from the radiation generated within the microwave oven 14 by means of a standard electro-magnetic radiation protective screen 36 which extends in a plane parallel to the touch screen 32.

The touch screen 32 may be used for both the input of data to the system, and the display of appropriate information to the user. The information displayed on the touch screen 32 is controlled by means of the elements within the data processing portion 12.

A bar-code reader 38 is also provided on the user interface region 16 for reading the product-identification bar code commonly appearing on the packaging of food and other household products. It should be understood that the household product items may comprise food products such as prepackaged meals being introduced into the oven to be cooked or other household products such as detergents, tinned foods etc.

The user interface 16 is also provided with a microphone 40 which forms part of a speech-input arrangement which, in combination with appropriate voice-recognition software loaded into the data processing portion 12 of the oven 10, may be used for the input of data to the system. This is particularly useful when product packaging is not provided with a bar code for product identification or when data is to be entered relating to fruit, vegetables or meat products which are frequently not prepackaged. Hence, the item identification data entered via the bar code reader 38 and command execution can therefore readily be enhanced by additional data created by the voice of the user of the system.

It should be appreciated that other forms of data input means could readily be incorporated into the appliance embodying the present invention such as for example, an appropriate reader means for reading data from a smart tag associated with a product item.

It will therefore be appreciated that the user interface 16 provides a common interface by which the user of the system can select, access and interact with the data management and communication facility and the general cooking function of the oven 10 with which it is associated. Advantageously, the touch screen 32 is arranged as a graphical user interface and is provided with an icon-based tool bar so as to allow for ease of access and choice of the appropriate functionality afforded by Internet tools such as standard web browsers and to achieve quick and ready access to functions commonly arising in relation to the electronic mail, electronic banking and electronic shopping facilities and the personal organizer facility of the system. Hence, the touch screen 32 provides a user interface not only for the general cooking functions of the oven 10 but also for the control and management of data and the Internet access achieved by means of the oven 10 embodying the system of the present invention

The Internet connection achieved through the system associated with the oven 10, in combination with appropriate software downloaded in the central processing unit 18, can be used to access and download selected information from any appropriate site on the Internet to the domestic environment to be used as required. For example, recipes relevant to a particular food product identified by means of the bar code scanner, or other appropriate input means, can readily be down-loaded and displayed on the touch screen 32. In addition, general advice relating to the cooking of such products or dietary information such as the calorific and fat content of such food stuffs can likewise be down-loaded for ready display upon the touch screen 32 for ready access by the consumer.

Typical scenarios in which the advantages of the present invention are best illustrated follows:

As household products are consumed during everyday domestic life, or when it comes to a user's attention that a particular item will soon need to be replaced, the bar code identification on the packaging of such a product is scanned by the bar code reader 38 provided on the front of the oven 10, so that data relating to that item is input into the data management system. In some instances, data relating to a food product about to be cooked in the oven 10 may be input by the user before placing the product inside the oven to be cooked, so ensuring that the consumed product will be replaced when the next delivery is made.

Alternatively, the user may prefer to verbally input data relating to the item to be replaced or ordered by means of the microphone 40 or by entering product information via a keypad provided on the touch screen 32 on the oven door. This is particularly useful when the product packaging is not provided with a bar code or when the consumable items are products such as fruit, vegetables or meat products which are frequently not prepackaged, or when the data relates to new items to be ordered perhaps for the first time or on one occasion only or items which have already been consumed but have not yet been input into the system.

The bar code reader 38, and the software in the data processing unit 12 associated with the speech or text input facilities of the system, serve to identify the particular product presented thereto. This information is then employed in generating an appropriate ordering of that product.

In accordance with any particular function or requirement, the data identifying a list of food or other household products to be replenished may be input to the system over a period of time, for example one week or one day, and can readily be stored within the data processing unit 12 of the oven 10. When the user wishes to place the order, the appropriate icon on the tool bar of the touch screen 32 and the list represented by the relevant accumulated data stored in the data processing unit 12 is transmitted via the Internet access to a remote facility such as a remotely located management system 42. It should be understood that alternatively the accumulated data may be transmitted to the remote management unit 42 automatically after a predetermined time or that an appropriate message will be displayed on the touch screen 32 after a predetermined time, to remind the user that these commodities have not yet been ordered.

It should be appreciated that data relating to each commodity input to the system can be transmitted over the Internet, as and when the data is input to the system. This information is then collected and collated at the remote management unit 42.

The user will also be prompted to specify a retailer with whom the order is to be placed and the location to which the order is to be delivered. This data may be input by selecting appropriate icons on the touch screen toolbar or via the other input means. Payment for the order placed is achieved by entering credit/debit or other card details via any of the data input means of the system. Alternatively, payment may be achieved by use of the electronic banking facility, the user conducting an on-line money transfer transaction from his account to that of the retailer with whom the order is placed. It should be understood that the retailer, delivery location and payment details required in placing each order may be stored in the central processing unit 18, to facilitate processing.

The remote management unit 42 serves to complete the ordering, and collection, of the ordered household commodities from the specified retailer at a remote storage location, and then arrange for delivery of the goods to a location specified by the user, such as his own home.

It should be appreciated that data relating to other items which have not yet been consumed but which may require replacement in the near future can be input to the system, together with data relating to other items which are required on some occasions only, rather than to replace an item already in stock in the household.

In a further advantageous embodiment of the present invention, a user may submit the order over the Internet to several remote management units 42 simultaneously, requesting information concerning the availability of the various commodities in the order and/or information concerning the costs of procurement of the order from a specified retailer. The requested information is then communicated to the user by each remote management unit 42 over the Internet and is displayed on the touch screen 32. The user can then compare the information from each remote management unit before making a decision as to which retailer the order should be placed. The user then selects a retailer on the basis of the information and transmits a request to the appropriate remote management unit 42 to complete the order.

It should be understood that on the basis of the information received from the remote management units 42, the user may decide to divide the order so as to procure different commodities from different retailers. In this instance, the user will amend the order by deleting the commodities not required from a particular retailer and transmitting amended orders to the appropriate remote management units 42.

It should also be appreciated that a single remote management unit may function to complete the ordering, and collection and delivery of the ordered household commodities from a plurality of specified retailers.

As an alternative to a communication channel provided by a power supply, a modem and telephone, or any other means of data communication, can be provided.

In any case, as and when data relating to a selection of household commodities is input to the system, a record that the stock of such items has been depleted or that such items are required is made readily available via the Internet connection of the appliance to an appropriate stock/warehouse location so that replacement or provision of these items can readily be initiated.

In addition to the electronic shopping facility, the present invention includes an electronic banking facility. When a user wishes to use this facility, the appropriate icon is selected on the touch screen toolbar on the user interface 16. A message requesting the user to enter authentication data is displayed, and subsequently a series of options relating to the various facilities available to the user is displayed on the touch screen 32. The user then selects the required option and is requested to enter details relating to the transaction. When all the information necessary to conduct the transaction has been provided by the user, the authentication transaction details are transmitted over the Internet to the appropriate remote management unit 42 where verification of the authentication data takes place and, on validation, the transaction details are processed. The electronic banking facility can be used for payment transaction, ordering of cheques, travellers cheques, bank drafts etc. and for statement or balance requests. Electronic banking facilities are known and so will not be described further herein.

An electronic mail facility is also provided by which e-mail messages can be sent and received. When a user wishes to use this facility, the appropriate icon on the touch screen tool bar is selected and the central processing unit 18 causes the appropriate information to be displayed. The user can open received mail or compose mail messages by entering data via the keypad on the touch screen 32 or via the microphone 40 on the user interface 16. The message can then be transmitted to the desired recipient over the Internet. Such electronic mail facilities are well known and will not be described further herein.

A personal organizer facility is also provided. A user can maintain a diary, request reminders for specific events such as birthdays, appointments etc. and can maintain personal data in various spreadsheet programs. The elements and operation of such system are well known and will not be described further herein.

A television and radio facility is also provided.

Turning now to Fig. 2, there is shown a block diagram of a complete arrangement in which an appliance associated with the system of the present invention is employed. The microwave oven 10 of Fig. 1 is illustrated which, in this embodiment, acts as a server to a local area network (LAN) provided in the home and may include nodes comprising other domestic appliances 44 commonly found in the home. Connection to the Internet is by means of the power supply 28 and this allows for access to remote locations, such as banking or retail locations 42 which can include a network-connected database or data warehouse arranged not only for the provision of relevant information to the consumer but also to allow for an appropriate inventory/ordering system such as that provided by means of on-line analytical processing (OLAP) or on-line transaction processing (OLTP) systems for effecting the ordering of the items in accordance with the data input into the system.

It will of course be appreciated that the invention is not restricted to the details of the foregoing embodiment. For example, the relevant appliance need not necessarily be a microwave oven but could, for example, be some other kitchen appliance such as a regular oven, a refrigerator and/or freezer or a dishwasher which are common in many households today and through use of which a consumer can readily record the identification of products requiring replenishment or other products required in the near future, such information then being readily transferred to the appropriate product ordering management system.

The present invention offers particular advantages in that the domestic appliance concerned is generally incorporated into a specific domestic environment, i.e., the kitchen, and in that the functionality of the domestic appliance is extended. Also, the invention is much more user friendly than current apparatus allowing for Internet access and it can readily provide a user interface that allows for ease of reading and therefore interaction within the environment within which the appliance is commonly used.

As will be appreciated from the following, the present invention can advantageously provide for simple and secure access to the Internet so as to conduct electronic banking or electronic shopping without necessarily requiring connection by means of a dedicated modem or telephone connection and in which the domestic appliance with which the system is associated or in which it is incorporated can readily execute its primary domestic function, for example cooking a food product, whilst advantageously allowing for easy and convenient re-ordering of any domestic consumable items. The system can also be adapted so as to provide further functionality that can prove appropriate or otherwise desirous and relevant to the location of the appliance with which it is associated within a domestic environment, for example such as the reception and display of a television broadcast.

## Claims

1. A data management and communication system, characterized by a kitchen appliance (10) arranged to effect a predetermined domestic function independent of the data management and communication system, the kitchen appliance including input means (32) for the input of data, and communication means (28) arranged for connection to a communications network so as to allow for communication between the appliance and a remote facility.

2. A system according to claim 1, characterized in that the kitchen appliance is arranged to request a supplier to replace items processed by the appliance.

3. A system according to either claim 1 or claim 2, characterized in that the communications network is the Internet.

4. A system according to any one of the preceding claims, characterized in that the kitchen appliance (10) receives data from the communication network and displays the data to a user of the appliance.

5. A system according to any one of the preceding claims, characterized in that the kitchen appliance (10) is arranged to perform banking functions via the communications network.

6. A system according to any one of the preceding claims, characterized in that the kitchen appliance (10) is arranged to perform home shopping functions via the communications network.

7. A system according to any one of the preceding claims, characterized in that the kitchen appliance (10) is arranged to perform receipt and transmission of electronic mail.

8. A system according to any one of the preceding claims, characterized by data storage means for generating a list of items processed by the kitchen appliance (10).

9. A system according to claim 8, characterized in that said list is arranged to be transferred to a remote management unit (42) which secures replacement of items processed.

10. A system according to any one of the preceding claims, characterized in that the kitchen appliance provides a personal organiser facility.

11. A system according to any one of the preceding claims, characterized in that the kitchen appliance comprises any of the following: oven, microwave oven, refrigerator and/or freezer, dishwasher.
